# EUROPEAN PATENT APPLICATION

(11) **EP 4 601 159 A1**
(43) Date of publication of application: **13.08.2025**
(21) Application number: 24824482.4
(22) Date of filing: 23.12.2024
(51) Int. Cl.: H02J 50/10, H02J 50/80, H02J 7/00

(54) **ELECTRONIC DEVICE FOR WIRELESSLY RECEIVING POWER, AND OPERATING METHOD THEREOF**

(30) Priority: 28.12.2023 KR 20230194279; 29.01.2024 KR 20240013151
(71) Applicant: Samsung Electronics Co., Ltd, Suwon-si, Gyeonggi-do 16677 (KR)
(72) Inventor: HA, Youngmi, Suwon-si, Gyeonggi-do 16677 (KR); CHO, Sungjoon, Suwon-si, Gyeonggi-do 16677 (KR); KWON, Hyungjun, Suwon-si, Gyeonggi-do 16677 (KR); PARK, Kyungmin, Suwon-si, Gyeonggi-do 16677 (KR); SONG, Mingi, Suwon-si, Gyeonggi-do 16677 (KR)
(74) Representative: Appleyard Lees IP LLP
(86) International application number: PCT/KR2024/020990
(87) International publication number: WO 2025/143730

(57) **Abstract**

According to an embodiment, an electronic device may comprise a power reception circuit configured to wirelessly receive power, a display, at least one processor, and memory storing instructions. According to an embodiment, the instructions, when executed by the at least one processor individually or collectively, may cause the electronic device to wirelessly receive, through the power reception circuit, power from an external electronic device. According to an embodiment, the instructions, when executed by the at least one processor individually or collectively, may cause the electronic device to display, on the display, first information indicating a state in which the electronic device is being charged while receiving the power. According to an embodiment, the instructions, when executed by the at least one processor individually or collectively, may cause the electronic device to identify an occurrence of an event designated to temporarily stop receiving the power, while receiving the power. According to an embodiment, the instructions, when executed by the at least one processor individually or collectively, may cause the electronic device to, based on the occurrence of the event, provide a first packet for requesting to temporarily stop transmitting the power to the external electronic device. According to an embodiment, the instructions, when executed by the at least one processor individually or collectively, may cause the electronic device to, based on providing the first packet, maintain displaying the first information on the display while the reception of the power is stopped.

## Description

### [Technical Field]

The disclosure relates to an electronic device wirelessly receiving power and a method for operating the same.

### [Background Art]

As wireless charging technology develops, methods for performing charging by supplying power to one charger for various electronic devices are being researched. Such wireless recharging technology adopts wireless power transmission/reception. For example, it enables an electronic device to be automatically charged by simply placing the electronic device on a recharging pad.

Wireless charging comes in a few different schemes, such as using electromagnetic induction, resonance, and radio frequency (RF)/microwave radiation that converts electrical energy into microwaves and transfers the microwaves.

Wireless charging-based power transmission methods transmit power between a first coil of the transmission end and a second coil of the reception end. The transmission end generates a magnetic field, and a current is induced and resonated according to variations in magnetic field in the reception end, creating energy.

The wireless power transmission technology using the electromagnetic induction scheme is a scheme for transferring power by the electromagnetic field induced in the coil. The wireless power transmission device applies a current to the transmission coil to generate an electromagnetic field, and an induced electromotive force is formed in the reception coil of the wireless power reception device, so that power may be wirelessly transmitted.

### [Disclosure of Invention]

### [Solution to Problems]

According to an embodiment, an electronic device may comprise a power reception circuit configured to wirelessly receive power, a display, at least one processor, and memory storing instructions. According to an embodiment, the instructions, when executed by the at least one processor individually or collectively, may cause the electronic device to wirelessly receive, through the power reception circuit, power from an external electronic device. According to an embodiment, the instructions, when executed by the at least one processor individually or collectively, may cause the electronic device to display, on the display, first information indicating a state in which the electronic device is being charged while receiving the power. According to an embodiment, the instructions, when executed by the at least one processor individually or collectively, may cause the electronic device to identify an occurrence of an event designated to temporarily stop receiving the power, while receiving the power. According to an embodiment, the instructions, when executed by the at least one processor individually or collectively, may cause the electronic device to, based on the occurrence of the event, provide a first packet for requesting to temporarily stop transmitting the power to the external electronic device. According to an embodiment, the instructions, when executed by the at least one processor individually or collectively, may cause the electronic device to, based on providing the first packet, maintain displaying the first information on the display while the reception of the power is stopped.

According to an embodiment, a method for operating an electronic device may comprise wirelessly receiving, through a power reception circuit included in the electronic device, power from an external electronic device. According to an embodiment, the method for operating the electronic device may comprise displaying, on a display of the electronic device, first information indicating a state in which the electronic device is being charged while receiving the power. According to an embodiment, the method for operating the electronic device may comprise identifying an occurrence of an event designated to temporarily stop receiving the power, while receiving the power. According to an embodiment, the method for operating the electronic device may comprise, based on the occurrence of the event, providing a first packet for requesting to temporarily stop transmitting the power to the external electronic device. According to an embodiment, the method for operating the electronic device may comprise, based on providing the first packet, maintaining displaying the first information on the display while the reception of the power is stopped.

According to an embodiment, a non-transitory computer-readable recording medium may store instructions that, when executed by at least one processor individually or collectively, cause an electronic device to wirelessly receive, through a power reception circuit included in an electronic device, power from an external electronic device, display, on a display of the electronic device, first information indicating a state in which the electronic device is being charged while receiving the power, identify an occurrence of an event designated to temporarily stop receiving the power, while receiving the power, based on the occurrence of the event, provide a first packet for requesting to temporarily stop transmitting the power to the external electronic device, and based on providing the first packet, maintain displaying the first information on the display while the reception of the power is stopped.

### [Brief Description of Drawings]

FIG. 1A is a block diagram illustrating an electronic device (hereinafter referred to as a "wireless power transmission device") wirelessly transmitting power and an electronic device (hereinafter referred to as a "wireless power reception device") wirelessly receiving power according to various embodiments;
FIG. 1B is a block diagram illustrating a wireless power transmission device and an electronic device (or a wireless power reception device) wirelessly receiving power according to an embodiment;
FIG. 2 is a block diagram illustrating a wireless charging system according to various embodiments;
FIG. 3 is a flowchart illustrating an operation of an electronic device wirelessly receiving power, according to an embodiment;
FIG. 4 is a data flowchart illustrating operations of an electronic device wirelessly transmitting power and an electronic device wirelessly receiving power, according to an embodiment;
FIG. 5A is a diagram illustrating a signal indicating an output voltage of a power reception circuit and a ping signal detection signal according to an embodiment;
FIG. 5B is a graph illustrating a signal indicating an output voltage and a ping signal detection signal according to an embodiment;
FIG. 6 is a flowchart illustrating an operation of maintaining display of first information indicating a state in which an electronic device wirelessly receiving power is being charged, according to an embodiment;
FIG. 7 is a flowchart illustrating an operation of maintaining display of first information indicating a state in which an electronic device wirelessly receiving power is being charged, according to an embodiment;
FIG. 8 is a flowchart illustrating an operation of displaying second information indicating a state in which an electronic device wirelessly receiving power is not charged, according to an embodiment;
FIG. 9 is a flowchart illustrating an operation of displaying second information indicating a state in which an electronic device wirelessly receiving power is not charged, according to an embodiment;
FIG. 10A is a view illustrating first information displayed by an electronic device wirelessly receiving power according to an embodiment;
FIG. 10B is a view illustrating second information displayed by an electronic device wirelessly receiving power according to an embodiment;
FIG. 11A is a view illustrating first information displayed by an electronic device wirelessly receiving power according to an embodiment;
FIG. 11B is a view illustrating second information displayed by an electronic device wirelessly receiving power according to an embodiment; and
FIG. 12 is a block diagram illustrating an electronic device in a network environment according to an embodiment.

### [Mode for the Invention]

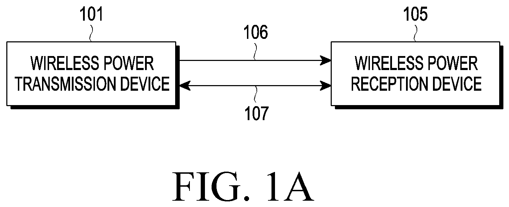

FIG. 1A is a block diagram illustrating an electronic device (hereinafter, referred to as a "wireless power transmission device") wirelessly transmitting power and an electronic device (hereinafter, referred to as a "wireless power reception device") wirelessly receiving power according to an embodiment.

Referring to FIG. 1A, a wireless power transmission device 101 according to an embodiment may wirelessly transmit power 106 to a wireless power reception device 105. Or, the wireless power transmission device 101 may receive information 107 from the wireless power reception device 105. For example, the wireless power transmission device 101 may transmit power 106 as per an induction scheme. Adopting the induction scheme, the wireless power transmission device 101 may include at least one of, e.g., a power source, a DC-DC conversion circuit (e.g., DC/DC converter), DC-AC conversion circuit (e.g., inverter), an amplifying circuit, an impedance matching circuit, at least one capacitor, at least one coil, or a communication modulation circuit. The at least one capacitor together with the at least one coil may form a resonance circuit. In an embodiment, the wireless power transmission device 101 may be implemented in a scheme defined in the wireless power consortium (WPC) Qi standard. The wireless power transmission device 101 may include a coil that is capable of produce a magnetic field when letting an electric current flow thereacross by an induction scheme. The process of the wireless power transmission device 101 producing an induced magnetic field may be represented as the wireless power transmission device 101 wirelessly transmitting the power 106. Further, an induced electromotive force (or current, voltage, and/or power) may be generated by the magnetic field generated around the coil of the wireless power reception device 105 according to a resonance scheme or an induction scheme. The process of producing an induced electromotive force through the coil may be represented as the 'wireless power reception device 105 wirelessly receives the power 106.'

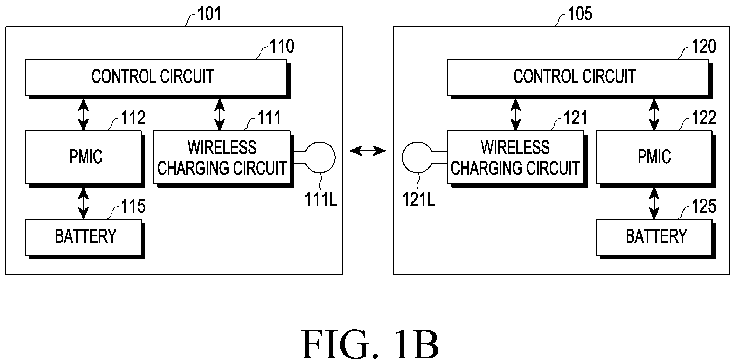

The wireless power transmission device 101 according to an embodiment may communicate with the wireless power reception device 105. For example, the wireless power transmission device 101 may communicate with the wireless power reception device 105 according to an in-band scheme. According to an embodiment, the wireless power transmission device 101 (e.g., the wireless charging IC of the wireless power transmission device 101) may exchange information necessary for wireless power transmission with the wireless power reception device 105 through in-band communication according to the WPC standard. For example, in-band communication may be a scheme in which they may exchange data with each other through frequency or amplitude modulation of the wireless power transmission signal in a context of wireless power transmission between the coil of the wireless power transmission device 101 and the coil of the wireless power reception device 105. The wireless power transmission device 101 may modulate data to be transmitted according to, e.g., a frequency shift keying (FSK) modulation scheme, and the wireless power reception device 105 may perform modulation according to an amplitude shift keying (ASK) modulation scheme, thereby providing information 107. The wireless power transmission device 101 may identify the information 107 provided by the wireless power reception device 105 based on the amplitude of the current and/or voltage applied to the transmission coil. In FIG. 1, the wireless power reception device 105 is shown as directly transmitting the information 107 to the wireless power transmission device 101, but this is merely for an easy understanding, and it will be appreciated by one of ordinary skill in the art that that the wireless power reception device 105 only controls on/off of at least one switch therein according to an embodiment. The operation of performing modulation based on an ASK modulation scheme and/or FSK modulation scheme may be understood as the operation of transmitting data (or packets) according to the in-band communication scheme, and the operation of performing demodulation based on the ASK demodulation scheme and/or FSK demodulation scheme may be understood as the operation of receiving data (or packets) according to the in-band communication scheme.

In the disclosure, that the wireless power transmission device 101 or the wireless power reception device 105 performs a specific operation may mean that various pieces of hardware included in the wireless power transmission device 101 or the wireless power reception device 105, e.g., a controller (e.g., a micro-controlling unit (MCU), a field programmable gate array (FPGA), an application specific integrated circuit (ASIC), a microprocessor, or an application processor (AP)) performs the specific operation. Or, that the wireless power transmission device 101 or the wireless power reception device 105 performs a specific operation may also mean that the controller included in the wireless power transmission device 101 or the wireless power reception device 105 controls another hardware device to perform the specific operation. That the wireless power transmission device 101 or the wireless power reception device 105 performs a specific operation may mean that the controller or another hardware device triggers the specific operation as an instruction for performing the specific operation, which is stored in a storage circuit (e.g., a memory) of the wireless power transmission device 101 or the wireless power reception device 105, is executed.

FIG. 1B is a block diagram illustrating a wireless power transmission device and an electronic device (or a wireless power reception device) wirelessly receiving power according to an embodiment.

Referring to FIG. 1B, according to an embodiment, the wireless power transmission device 101 may include a control circuit 110, a wireless charging circuit 111, a PMIC 112, and a battery 115.

According to an embodiment, the control circuit 110 may control the overall operation of the wireless power transmission device 101. According to an embodiment, the control circuit 110 may control operations for the wireless power transmission device 101 to charge the wireless power reception device 105. For example, the control circuit 110 may be implemented to be identical or similar to the controller (e.g., a micro controlling unit (MCU), a field programmable gate array (FPGA), an application specific integrated circuit (ASIC), a microprocessor, or an application processor (AP)) of FIG. 1A.

According to an embodiment, the wireless charging circuit 111 may provide power to the wireless power reception device 105 using power obtained from an external power source or the battery 115. For example, the wireless charging circuit 111 may wirelessly provide power to the wireless power reception device 105 through the coil 111L.

According to an embodiment, the wireless charging circuit 111 may obtain power from an external power source or an external device in a wired or wireless manner, and may charge the battery 115 using the obtained power.

According to an embodiment, the wireless charging circuit 111 may function as a TX IC when the wireless power transmission device 101 charges the wireless power reception device 105. Further, the wireless charging circuit 111 may function as an RX IC when the wireless power transmission device 101 receives power from the outside in a wired or wireless manner. For example, the wireless charging circuit 111 may include at least one of a direct current (DC)-DC conversion circuit (e.g., a DC/DC converter), a DC-alternating current (AC) conversion circuit (e.g., an inverter or a rectifier), an amplification circuit, an impedance matching circuit, at least one capacitor, at least one coil, or a communication modulation circuit. The at least one capacitor together with the at least one coil may form a resonance circuit. In an embodiment, the wireless power transmission device 101 may be implemented in a scheme defined in the wireless power consortium (WPC) Qi standard. The wireless power transmission device 101 may include a coil 111L that is capable of produce a magnetic field when letting an electric current flow thereacross by an induction scheme.

According to an embodiment, the PMIC 112 may include a charger function for charging the battery with wired input power (e.g., a travel adapter) and/or wireless input power, a function for communicating (e.g., USB power delivery (PD) communication, AFC communication, or quick charge communication) with an external power supply device (e.g., a travel adapter) connected to a USB terminal, a function for supplying power to the battery 115, a function for supplying necessary power to the system, a function for supplying power suitable for the voltage level required for each element, and/or a function for supplying power to an Rx IC (e.g., the wireless charging circuit 121) in a wireless power transfer mode.

According to an embodiment, the wireless power reception device 105 may include a control circuit 120, a wireless charging circuit 121, a PMIC 122, and a battery 125.

According to an embodiment, the control circuit 120 may control the overall operation of the wireless power reception device 105. According to an embodiment, the control circuit 120 may control operations in which the wireless power reception device 105 receives power from the wireless power transmission device 101. For example, the control circuit 120 may be implemented to be identical or similar to the controller (e.g., a micro controlling unit (MCU), a field programmable gate array (FPGA), an application specific integrated circuit (ASIC), a microprocessor, or an application processor (AP)) of FIG. 1A.

According to an embodiment, the wireless charging circuit 121 may receive power from the wireless power transmission device 101. For example, the wireless charging circuit 121 may wirelessly receive power from the wireless power transmission device 101 through the coil 121L. For example, the wireless charging circuit 121 may charge the battery 125 using the wirelessly received power.

According to an embodiment, the wireless charging circuit 121 may wirelessly transmit power to an external electronic device. For example, the wireless charging circuit 121 may charge the battery of the external electronic device.

According to an embodiment, the wireless charging circuit 121 may function as an RX IC when receiving power from an external power source or the wireless power transmission device 101 in a wired or wireless manner. Alternatively, the wireless charging circuit 121 may function as a TX IC when the wireless power reception device 101 charges the external device. For example, the wireless charging circuit 121 may include at least one of a DC-DC conversion circuit (e.g., a DC/DC converter), a DC-AC conversion circuit (e.g., an inverter or a rectifier), an amplification circuit, an impedance matching circuit, at least one capacitor, at least one coil, or a communication modulation circuit. The at least one capacitor together with the at least one coil may form a resonance circuit. In an embodiment, the wireless power reception device 105 may be implemented in a manner defined in the Qi standard of the wireless power consortium (WPC). The wireless power reception device 105 may include a coil 121L capable of generating an induced magnetic field when a current flows according to an induction method. For example, the wireless charging circuit 121 may be implemented to be identical or similar to the wireless charging circuit 111 of the wireless power transmission device 101.

According to an embodiment, the PMIC 122 may include a charger function for charging the battery with wired input power (e.g., a travel adapter) and/or wireless input power, a function for communicating (e.g., USB power delivery (PD) communication, AFC communication, or quick charge communication) with an external power supply device (e.g., a travel adapter) connected to a USB terminal, a function for supplying power to the battery 125, a function for supplying necessary power to the system, a function for supplying power suitable for the voltage level required for each element, and/or a function for receiving power from a Tx IC in a wireless power reception mode.

Hereinafter, for convenience of description, the wireless power reception device 105 may be referred to as an electronic device (or an electronic device that wirelessly receives power) 105, and the wireless power transmission device 101 may be referred to as an (external) electronic device 101.

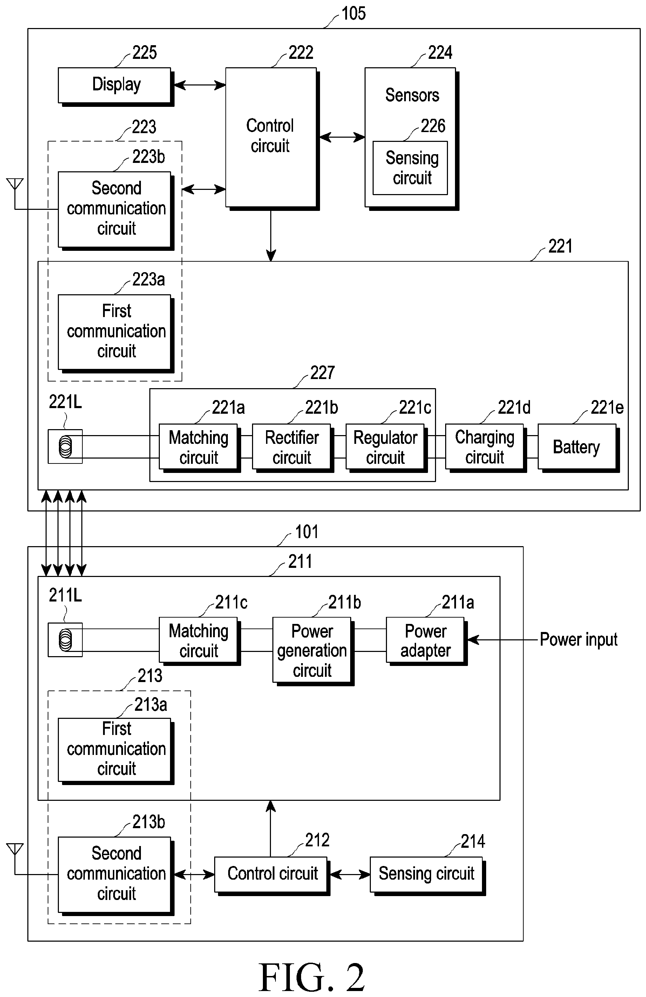

FIG. 2 is a block diagram illustrating a wireless charging system according to an embodiments.

Referring to FIG. 2, a wireless charging system according to an embodiment may include a wireless power transmission device 101 and an electronic device (e.g., a wireless power reception device of FIG. 1) 105. For example, when the electronic device 105 is mounted on the wireless power transmission device 101, the wireless power transmission device 101 may wirelessly supply power to the electronic device 105.

According to an embodiment, the wireless power transmission device 101 may include a power transmission circuit 211, a control circuit 212, a communication circuit 213, or a sensing circuit 214.

According to an embodiment, the power transmission circuit 211 may include a power adapter 211a that receives power from the outside and appropriately converts the voltage of the input power, a power generation circuit 211b that generates power, or a matching circuit 211c that enhances transmission efficiency between the coil 211L and the coil 221L.

According to an embodiment, the control circuit 212 may perform the overall control of the wireless power transmission device 101. The control circuit 212 may generate various messages (e.g., instructions) necessary for wireless power transmission and may transfer the generated messages to the communication circuit 213. In an embodiment, the control circuit 212 may calculate power (or an amount of power) to be transmitted to the electronic device 105 based on the information received from the communication circuit 213. In an embodiment, the control circuit 212 may control the power transmission circuit 211 so that power generated by the coil (or radiator) 211L is transmitted to the electronic device 105. For example, the control circuit 212 may be implemented as at least one processor (e.g., an application processor and/or a PMIC).

According to an embodiment, the communication circuit 213 may include at least one of a first communication circuit 213a or a second communication circuit 213b. For example, the first communication circuit 213a may communicate with the first communication circuit 223a of the electronic device 105 based on an in-band (IB) communication scheme using a frequency that is identical or adjacent to the frequency used for power transfer in the coil 211L.

The first communication circuit 213a may communicate with the first communication circuit 223a of the electronic device 105 using the transmission coil 211L. Data (or a communication signal) generated by the first communication circuit 213a may be transmitted using the coil 211L. The first communication circuit 213a may transfer data to the electronic device 105 using a frequency shift keying (FSK) modulation scheme. According to an embodiment, the first communication circuit 213a may communicate with the first communication circuit 223a of the electronic device 105 by changing the frequency of the power signal transferred through the coil 211L. Alternatively, the first communication circuit 213a may communicate with the first communication circuit 223a of the electronic device 105 by allowing data to be included in the power signal generated by the power generation circuit 211b. For example, the first communication circuit 213a may perform modulation by increasing or decreasing the frequency of the power transmission signal. The electronic device 105 may identify data from the electronic device 101 by performing demodulation based on the frequency of the signal measured by the coil 221L.

For example, the second communication circuit 213b may communicate with the second communication circuit 223b of the electronic device 105 based on an out-of-band (OOB) communication scheme using a frequency different from the frequency used for power transfer in the coil 211L. For example, the second communication circuit 213b may obtain information related to the charging status (e.g., the voltage value behind the rectifier, the rectified voltage value (e.g., Vrect) information, current information (e.g., Iout) flowing through the coil 221L or the rectifying circuit 221b, various packets, authentication information, and/or messages) from the second communication circuit 223b using any one of various short-range communication schemes such as Bluetooth, Bluetooth low energy (BLE), Wi-Fi, or near field communication (NFC).

According to an embodiment, the sensing circuit 214 may include at least one sensor, and may detect at least one state of the electronic device 101 using the at least one sensor.

According to an embodiment, the sensing circuit 214 may include at least one of a temperature sensor, a motion sensor, a magnetic field sensor (hall sensor), or a current (or voltage) sensor, may detect the temperature state of the electronic device 101 using the temperature sensor, may detect the motion state of the electronic device 101 using the motion sensor, may detect whether the electronic device 101 is coupled to the electronic device 105 using the magnetic field sensor, and may detect the state, e.g., the current level, the voltage level, and/or the power level, of the output signal of the electronic device 101 using the current (or voltage) sensor.

According to an embodiment, the current (or voltage) sensor may measure the signal in the power transmission circuit 211. The current (or voltage) sensor may measure a signal in at least a partial area of the matching circuit 211c or the power generation circuit 211b. For example, the current (or voltage) sensor may include a circuit for measuring a signal at a front end of the coil 211L.

According to an embodiment, the sensing circuit 214 may include a circuit for foreign object detection (FOD).

According to an embodiment, the sensing circuit 214 may identify a change in capacitance due to a foreign object. For example, the sensing circuit 214 may identify a change in capacitance as a foreign object approaches or contacts (or is mounted on) the electronic device 101. Further, the sensing circuit 214 may provide a sensing value (or capacitance change amount) indicating a change in capacitance to the control circuit 212. For example, the sensing circuit 214 may include a coil and a sensor IC for sensing a change in capacitance.

According to an embodiment, the electronic device 105 may include a power reception circuit 221, a control circuit 222, a communication circuit 223, sensors 224, or a display 225. The sensors 224 may include a sensing circuit 226.

According to an embodiment, the power reception circuit 221 may include a coil 221L that wirelessly receives power from the electronic device 101, an Rx IC 227, a charging circuit 221d (e.g., a PMIC, a DCDC converter, a switched capacitor, or a voltage divider), or a battery 221e. In an embodiment, the Rx IC 227 may include a matching circuit 221a connected to the coil 221L, a rectifying circuit 221b for rectifying the received AC power to DC, or an adjusting circuit (e.g., an LDO) 221c for adjusting a charging voltage. For example, the Rx IC 227 may include a full bridge circuit as the rectifying circuit 221b. The Rx IC 227 may control the full-bridge circuit to be driven by an inverter (e.g., DC→AC) in a wireless power transmission operation, and may control the full-bridge circuit to be driven by a rectifier (e.g., AC→DC) in a wireless power reception operation.

According to an embodiment, the control circuit 222 may perform the overall control of the electronic device 105. The control circuit 222 may generate various messages necessary for wireless power reception and transfer the generated messages to the communication circuit 223. For example, the control circuit 222 may be implemented as at least one processor (e.g., an application processor and/or a PMIC). According to an embodiment, the PMIC may include a charger function for charging the battery with wired and wireless input power, a function for communicating (e.g., USB power delivery (PD) communication, AFC communication, or quick charge communication) with an external power supply device (e.g., a travel adapter) connected to a USB terminal, a function for supplying necessary power to the system, a function for supplying power suitable for the voltage level required for each element, and/or a function for supplying power to the Rx IC in the wireless power transfer mode.

According to an embodiment, the communication circuit 223 may include at least one of a first communication circuit 223a or a second communication circuit 223b. The first communication circuit 223a may communicate with the electronic device 101 through the coil 221L.

The first communication circuit 223a may communicate with the first communication circuit 213a of the electronic device 101 using the coil 221L. Data (or a communication signal) generated by the first communication circuit 223a may be transmitted using the coil 221L. The first communication circuit 223a may transfer data to the electronic device 101 using an amplitude shift keying (ASK) modulation scheme. For example, the first communication circuit 223a may cause a change in the load (e.g., a change in the impedance of the load) of the electronic device 101 according to the modulation scheme. For example, when the ASK modulation scheme is used, the first communication circuit 223a may cause a change in the amplitude of the impedance corresponding to the load. Accordingly, at least one of the voltage, the current, or the magnitude of power measured at the coil 211L may be changed. The first communication circuit 213a of the electronic device 101 may identify data by the electronic device 105 by demodulating the change in magnitude. The second communication circuit 223b may communicate with the electronic device 101 using any one of various short-range communication schemes such as Bluetooth, BLE, Wi-Fi, or NFC.

In an embodiment of the disclosure, packets, information, or data transmitted and received by the external electronic device 101 and the electronic device 105 may be transmitted and/or received through at least one of the first communication circuit 223a or the second communication circuit 223b.

According to an embodiment, the sensors 224 may include at least some of a current/voltage sensor, a temperature sensor, an illuminance sensor, or an acceleration sensor.

According to an embodiment, the sensing circuit 226 may detect the electronic device 101 by detecting a search signal or power received from the electronic device 101. The sensing circuit 226 may detect a signal change in the input/output terminal of the coil 221L, the matching circuit 221a, or the rectifying circuit 221b due to the signal of the coil 221L generated by the signal output from the electronic device 101. According to an embodiment, the sensing circuit 226 may be included in the power reception circuit 221.

According to an embodiment, the display 225 may display various types of display information necessary for wireless power transmission/reception.

According to an embodiment, a wireless power transmission device 101 that wirelessly transmits power according to an electromagnetic induction scheme may detect whether an electronic device 105 that wirelessly receives power is mounted and may periodically transmit a ping signal (or ping energy) to wake up the electronic device 105. In this case, the electronic device 105 may wake up the RX IC only with a ping signal (or ping energy) provided from the wireless power transmission device 101 without supplying power through a separate battery. Accordingly, the wireless power transmission electronic device 101 may periodically transmit a ping signal (or ping energy) having a predetermined interval to identify the mounting time and/or the wake-up time of the electronic device 105.

Meanwhile, at least some of the operations of the electronic device 105 wirelessly receiving power described below may be performed by the control circuit 222. However, for convenience of description, it will be assumed that the subject of the operation is the electronic device 105 that wirelessly receives power.

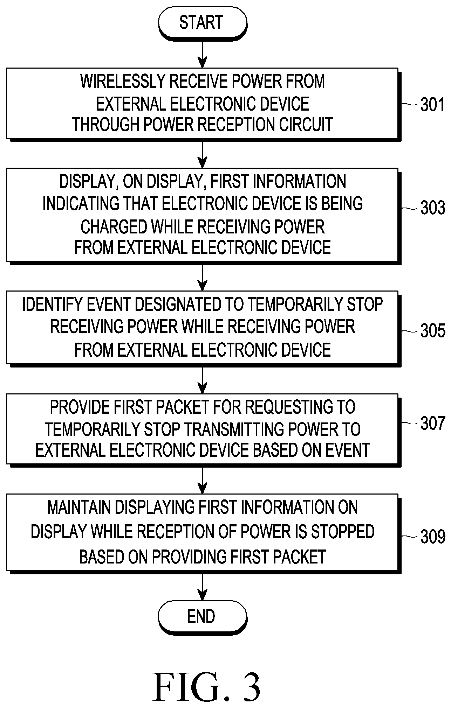

FIG. 3 is a flowchart illustrating an operation of an electronic device wirelessly receiving power, according to an embodiment.

Referring to FIG. 3, according to an embodiment, in operation 301, the electronic device (e.g., the wireless power reception device 105 of FIG. 1 or the electronic device 105 of FIG. 2) that wirelessly receives power may wirelessly receive power from an external electronic device (e.g., the wireless power transmission device 101 of FIG. 2) through a power reception circuit (e.g., the power reception circuit 221 of FIG. 2). According to an embodiment, the electronic device 105 may identify the power transfer state or the power transfer mode of the external electronic device 101 based on a pin or register (e.g., VOUT_GD GPID or status register (SR)) included in the Rx IC 227. In this case, the Rx IC 227 may use in-band communication or out-band communication.

According to an embodiment, based on receiving power from the external electronic device 101, the electronic device 105 may display, on a display (e.g., the display 225 of FIG. 2), first information indicating a state in which the electronic device 105 is being charged or a state in which the electronic device 105 is connected to the external electronic device 101 for charging. For example, in operation 303, while receiving power from the external electronic device 101, the electronic device 105 may display first information indicating the state in which the electronic device 105 is being charged or the state in which the electronic device 105 is connected to the external electronic device 101 for charging, on the display 225. For example, the first information may include information indicating that the electronic device 105 is being charged, the time required until the electronic device 105 is fully charged, the battery level of the electronic device 105, and/or information about the charging history of the electronic device 105. Put another way, while receiving the power 106, the display 225 may display first information indicating whether the electronic device 105 is charging and/or is connected to a charger.

According to an embodiment, in operation 305, while receiving power from the external electronic device 101, the electronic device 105 may identify an event designated to temporarily stop receiving power from the external electronic device 101. For example, the event may include a pre-makeup event (e.g., a state in which the battery level is partially discharged after being fully charged or a state in which the battery level is changed to 98% to 99% after being fully charged), a phone call reception event, or a heat detection event exceeding a designated temperature.

According to an embodiment, in operation 307, the electronic device 105 may provide a first packet for requesting to temporarily stop transmission of power to the external electronic device 101, based on the event (or occurrence of the event). For example, the first packet may include information or a message for requesting the external electronic device 101 to enter a power transmission stop mode (e.g., a power hold mode) or a ping mode (in which power transmission is also stopped). For example, the first packet may be provided to the external electronic device 101 by the ASK scheme. The external electronic device 101 may enter the power transmission stop mode or the ping mode based on the reception of the first packet. In this case, the external electronic device 101 may output only the ping signal without wirelessly transmitting power. Accordingly, the electronic device 105 may temporarily not receive power for charging the battery (e.g., the battery 221e of FIG. 2) from the external electronic device 101. However, the electronic device 105 may identify or detect a ping signal output from the external electronic device 101.

According to an embodiment, in operation 309, after providing the first packet, the electronic device 105 may maintain the display of the first information about the display 105 while power reception is stopped. For example, the electronic device 105 may maintain the display of the first information while not receiving power for charging the battery 221e from the external electronic device 101. For example, the electronic device 105 may maintain the display of the first information based on the detection of the ping signal output from the external electronic device 101 in a state in which the output voltage corresponding to the power received from the external electronic device 101 (e.g., the output voltage of the rectifying circuit 221b of FIG. 2 or the output voltage of the adjusting circuit 221c) is not identified (e.g., a voltage of 0V is identified).

According to an embodiment, the electronic device 105 may transmit, to the external electronic device 101, a switching packet (e.g., the first packet) for requesting the external electronic device 101 to switch to a power transmission stop mode (power hold mode).

According to an embodiment, before transmitting the switching packet, the electronic device 105 may cause reception of a ping signal output by the external electronic device 101, thereby identifying that the external electronic device 101 is in the power transmission stop mode (power hold mode) even if the electronic device 105 (or the RX IC 227) does not supply separate power.

According to an embodiment, the electronic device 105 may switch to the ping signal reception mode through the PING_NEN GPIO control of the electronic device 105 (e.g., the RX IC 227). The electronic device 105 may identify that the external electronic device 101 is in the power transmission stop mode (power hold mode) through PDET_B GPIO and/or a status register (SR). In this case, the electronic device 105 may transfer a corresponding packet through in-band communication or may transmit corresponding information through out-band communication.

Conventionally, when a specific event (e.g., a pre-makeup event, a phone call reception event, or a heat detection event exceeding a designated temperature) is detected during charging, an electronic device that wirelessly receives power terminates the connection with the electronic device that wirelessly transmits power. Further, when the corresponding event is detected, the conventional electronic device does not display information indicating the state of being charged or the connection state for charging. **In** other words, when the corresponding event is detected, the conventional electronic device displays information indicating non-charging Accordingly, the conventional electronic device may frequently display information indicating charging and non-charging whenever the corresponding event is detected, causing inconvenience to the user.

Further, conventionally, when a specific event (e.g., a pre-makeup event, a phone call reception event, or a heat detection event exceeding a designated temperature) is detected during charging, an electronic device that wirelessly receives power may temporarily stop receiving power wirelessly. However, when the corresponding event is detected, the conventional electronic device displays information indicating non-charging. **In** other words, the conventional electronic device may not provide the user with information indicating that wireless power reception is temporarily stopped. Further, the conventional electronic device may frequently display information indicating charging and non-charging whenever the corresponding event is detected, causing inconvenience to the user.

The electronic device 105 according to an embodiment may maintain the display of the first information indicating the state of being charged or the connection state for charging on the display 105 while the reception of the power is temporarily stopped based on the provision of the first packet. Accordingly, when wireless power reception is temporarily stopped, the electronic device 105 may provide the user with information indicating that the connection for charging is maintained. Further, when wireless power reception is temporarily stopped, the electronic device 105 may prevent frequent display of the information indicating charging and non-charging.

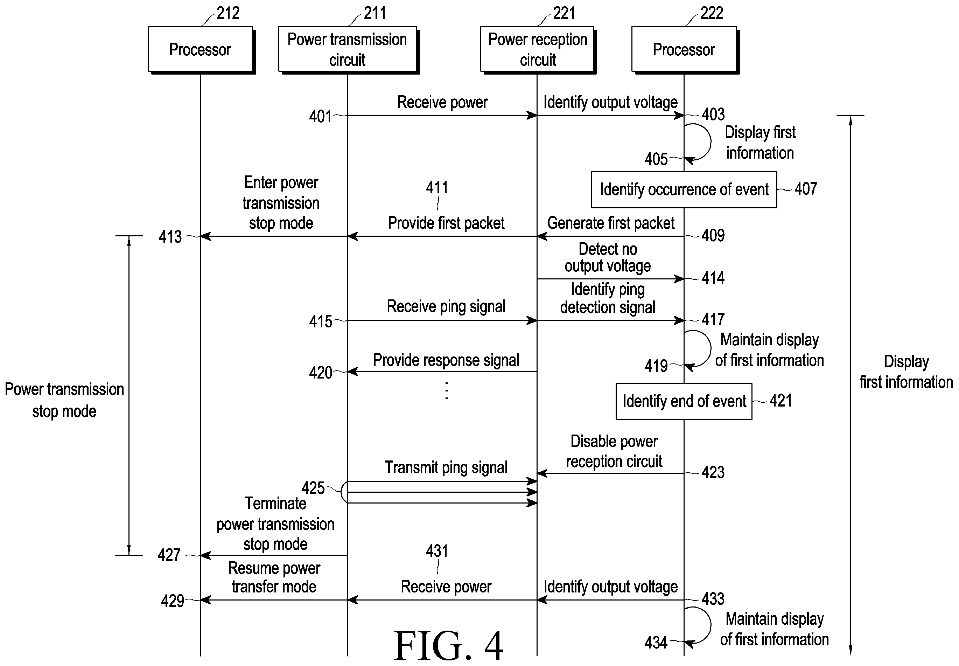

FIG. 4 is a data flowchart illustrating operations of an electronic device wirelessly transmitting power and an electronic device wirelessly receiving power, according to an embodiment.

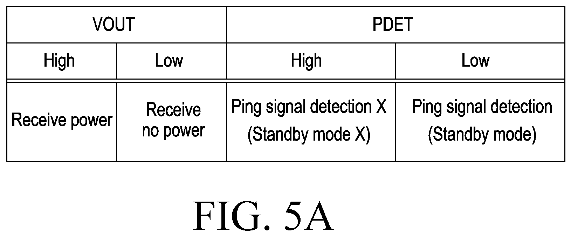

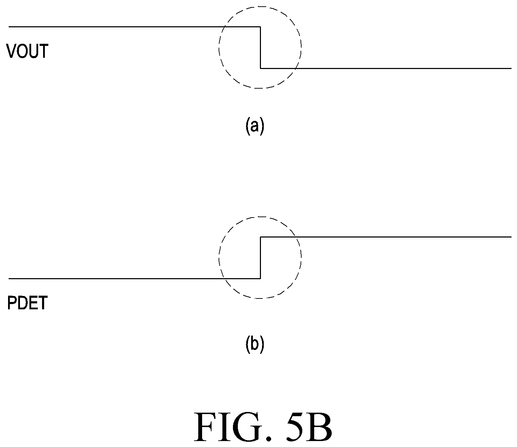

FIG. 5A is a diagram illustrating a signal indicating an output voltage of a power reception circuit and a ping signal detection signal according to an embodiment. FIG. 5B is a graph illustrating a signal indicating an output voltage and a ping signal detection signal according to an embodiment.

Referring to FIG. 5A, while receiving power from the external electronic device 101, the signal VOUT indicating the output voltage of the power reception circuit 221 may indicate a first level (e.g., a high level). While power is not received from the external electronic device 101, the signal VOUT indicating the output voltage of the power reception circuit 221 may indicate a second level (e.g., a low level). While detecting the ping signal output from the external electronic device 101, the ping signal detection signal PDET may indicate the second level (e.g., the low level). While the ping signal output from the external electronic device 101 is not detected, the ping signal detection signal PDET may indicate the first level (e.g., the high level). For example, when the ping signal detection signal PDET is at the second level, the external electronic device 101 may be driven in a power transmission stop mode, a standby mode, or a ping mode.

According to an embodiment, pins for identifying the signal VOUT indicating the output voltage and the ping signal detection signal PDET may be added to the control circuit 222. However, the signals and the signal levels described in FIGS. 5A and 5B are merely exemplary, and the technical spirit of the disclosure may not be limited thereto. For example, the control circuit 222 may use various signals capable of identifying whether power is received and whether a ping signal is detected, and the levels of the signals may be set to differ depending on implementation.

Referring to FIG. 4, according to an embodiment, an external electronic device (e.g., the wireless power transmission device 101 of FIG. 2) that wirelessly transmits power may include a power transmission circuit 211 and a processor 212 (e.g., the control circuit 212 of FIG. 2). An electronic device (e.g., the wireless power reception device 105 of FIG. 2) that wirelessly receives power may include a power reception circuit 221 and a processor 222 (e.g., the control circuit 222 of FIG. 2).

According to an embodiment, in operation 401, when the electronic device 105 is positioned (or mounted) in the charging area of the external electronic device 101, the power reception circuit 221 may wirelessly receive power from the power transmission circuit 211. For example, the external electronic device 101 may enter a power transfer state (or a power transfer phase) and may transmit power to the electronic device 105.

According to an embodiment, in operation 403, the processor 222 may identify an output voltage (e.g., the output voltage VOUT of the power reception circuit 221) corresponding to the power received through the power reception circuit 221. For example, according to an embodiment, referring to FIGS. 5A and 5B, the processor 222 may identify the signal indicating the output voltage VOUT of the first level (e.g., the high level). According to an embodiment, the processor 222 may identify a rising edge transitioning from the second level (e.g., the low level) to the first level (e.g., the high level). According to implementation, the processor 222 may identify the level (e.g., the output voltage of the rectifying circuit 211b at the high level) of the signal indicating the output voltage (e.g., Vrect) of the rectifying circuit 211b instead of the output voltage VOUT.

According to an embodiment, in operation 405, the processor 222 may display the first information based on identifying the output voltage (e.g., based on identifying the output voltage of the high level). For example, the first information may include information indicating a state in which the electronic device 105 is being charged or a state in which the electronic device 105 is connected to the external electronic device 101 for charging.

According to an embodiment, in operation 407, the processor 222 may identify the occurrence of an event designated to temporarily stop receiving power. For example, the event may include a pre-makeup event, a phone call reception event, and/or a heat detection event exceeding a designated temperature.

According to an embodiment, in operation 409, the processor 222 may generate a first packet. For example, the first packet may include information or a message for requesting the external electronic device 101 to temporarily stop transmitting power, for example by entering a power transmission stop mode (e.g., a power hold mode) or a ping mode. For example, the power transmission stop mode (e.g., power hold mode) or the ping mode may indicate a mode in which the external electronic device 101 outputs a ping signal without transmitting power for charging.

According to an embodiment, in operation 411, the power reception circuit 221 may provide the first packet to the external electronic device 101 under the control of the processor 222. For example, the first packet may be provided to the external electronic device 101 by the ASK scheme.

According to an embodiment, in operation 413, the external electronic device 101 may enter the power transmission stop mode or the ping mode, based on reception of the first packet. The external electronic device 101 may output a ping signal without transmitting power for charging. Accordingly, the power reception circuit 221 may not receive power for charging.

According to an embodiment, in operation 414, the processor 222 may identify the output voltage VOUT corresponding to the power received through the power reception circuit 221. According to an embodiment, referring to FIGS. 5A and 5B, the processor 222 may identify the signal indicating the output voltage VOUT of the second level (e.g., the low level). According to the implementation, the processor 222 may identify the level (e.g., the output voltage of the rectifying circuit 211b at the low level) of the signal indicating the output voltage (e.g., Vrect) of the rectifying circuit 211b instead of the output voltage VOUT.

According to an embodiment, in operation 415, the power reception circuit 221 may identify or detect a ping signal output from the power transmission circuit 211. In operation 417, the processor 222 may identify the ping signal detection signal PDET based on identifying the ping signal by the power reception circuit 221. According to an embodiment, referring to FIGS. 5A and 5B, when the power reception circuit 221 identifies the ping signal, the processor 222 may identify the signal indicating the ping signal detection signal PDET of the second level (e.g., the low level). According to the implementation, the processor 222 may identify a falling edge transitioning from the first level (e.g., high level) to the second level (e.g., low level).

According to an embodiment, in operation 419, the processor 222 may maintain the display of the first information, based on identifying the output voltage VOUT of the second level (e.g., the low level) and the ping signal detection signal PDET of the second level (e.g., the low level).

According to an embodiment, in operation 420, the power reception circuit 221 may provide a response signal to the identified ping signal to the external electronic device 101. Thereafter, the power transmission circuit 211 may periodically output a ping signal. Further, the power reception circuit 221 may provide a response signal to the periodically output ping signal to the external electronic device 101.

According to an embodiment, in operation 421, the processor 222 may identify the end of the event. For example, the phone call reception may be terminated or the heating state exceeding the designated temperature may be terminated.

According to an embodiment, in operation 423, the processor 220 may disable the power reception circuit 221 for a designated time, based on identifying the end of the event. For example, the processor 220 may reset the power reception circuit 221. In operation 425, the power transmission circuit 211 may output a plurality of ping signals for a designated time. The power reception circuit 221 may not provide a response signal to the plurality of ping signals output from the power transmission circuit 211 for a designated time.

According to an embodiment, in operation 427, the power reception circuit 211 may request termination of the power transmission stop mode, based on failing to receive the response signal for a designated time.

According to an embodiment, in operation 429, the processor 212 may resume the power transfer mode. Further, the processor 212 may instruct the power transmission circuit 211 to resume power transmission.

According to an embodiment, in operation 431, as power transmission resumes, the power reception circuit 221 may wirelessly receive power.

According to an embodiment, in operation 433, the processor 222 may identify the output voltage VOUT. The processor 222 may identify the output voltage VOUT corresponding to the power received through the power reception circuit 221. According to an embodiment, referring to FIGS. 5A and 5B, the processor 222 may identify the signal indicating the output voltage VOUT of the first level (e.g., the high level). According to an embodiment, the processor 222 may identify a rising edge transitioning from the second level (e.g., the low level) to the first level (e.g., the high level).

According to an embodiment, in operation 434, the processor 222 may maintain the display of the first information based on identifying the output voltage (e.g., based on identifying the output voltage of the high level). For example, the processor 222 may maintain the display of the first information from operation 405 to operation 434.

The electronic device 105 according to an embodiment may maintain the display of the first information indicating the state of being charged or the connection state for charging on the display 105 while the reception of the power is temporarily stopped based on the provision of the first packet. Accordingly, when wireless power reception is temporarily stopped, the electronic device 105 may provide the user with information indicating that the connection for charging is maintained. Further, when wireless power reception is temporarily stopped, the electronic device 105 may prevent frequent display (or change) of the information indicating charging and non-charging.

Meanwhile, the types of the signals and the levels of the signals described in FIGS. 5A and 5B are merely examples for description, and the technical spirit of the disclosure may not be limited thereto.

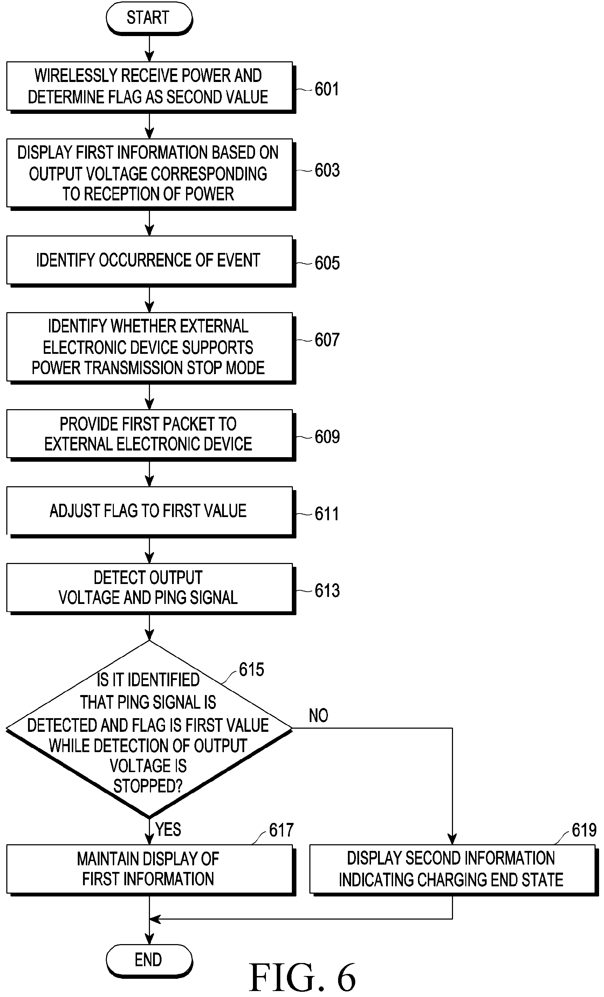

FIG. 6 is a flowchart illustrating an operation of maintaining display of first information indicating a state in which an electronic device wirelessly receiving power is being charged, according to an embodiment.

Referring to FIG. 6, according to an embodiment, in operation 601, the electronic device (e.g., the wireless power reception device 105 of FIG. 2) that wirelessly receives power may wirelessly receive power from an external electronic device (e.g., the wireless power transmission device 101 of FIG. 2). The electronic device 105 may determine, designate, or adjust the flag indicating a state in which the electronic device 105 temporarily stops receiving power (e.g., a power transmission stop state) as a second value (e.g., flag = 0").

According to an embodiment, in operation 603, the electronic device 105 may display the first information based on identifying the output voltage (e.g., the high-level output voltage VOUT) of the power reception circuit (e.g., the power reception circuit 221 of FIG. 2) corresponding to the reception of the power. According to an embodiment, the electronic device 105 may identify the VOUT_GS GPIO of the RX IC (e.g., 227). When it is identified that the output voltage of the VOUT_GS GPIO is high, the electronic device 105 may display the first information (e.g., information indicating the state of being charged).

According to an embodiment, in operation 605, the electronic device 105 may identify the occurrence of an event designated to temporarily stop receiving power.

According to an embodiment, in operation 607, the electronic device 105 may identify whether the external electronic device 101 supports the power transmission stop mode (or the ping mode). For example, the electronic device 105 may exchange information with the external electronic device 101 to determine whether the external electronic device 101 supports the power transmission stop mode (or the ping mode). When it is identified that the external electronic device 101 does not support the power transmission stop mode (or the ping mode), the electronic device 105 may perform a normal charging operation. In this case, the electronic device 105 may display information or UX indicating that the electronic device 105 is being charged.

According to an embodiment, when it is identified that the external electronic device 101 supports the power transmission stop mode (or the ping mode), the electronic device 105 may request the external electronic device 101 to enter the power transmission stop mode (e.g., the power hold mode) or the ping mode. For example, when it is identified that the external electronic device 101 supports the power transmission stop mode (or the ping mode), in operation 609, the electronic device 105 may provide the first packet to the external electronic device 101. For example, the first packet may include information or a message for requesting the external electronic device 101 to enter a power transmission stop mode (e.g., a power hold mode) or a ping mode.

According to an embodiment, in operation 611, based on providing the first packet, the electronic device 105 may designate or adjust the flag indicating the state in which the electronic device 105 temporarily stops receiving power as a first value (e.g., flag="1").

According to an embodiment, in operation 613, the electronic device 105 may detect the output voltage (e.g., the high-level output voltage) of the power reception circuit (e.g., the power reception circuit 221 of FIG. 2) and the ping signal.

According to an embodiment, in operation 615, the electronic device 105 may identify whether the ping signal is detected and the flag is the first value in a state in which the detection of the output voltage of the power reception circuit 221 is stopped (e.g., a state in which the output voltage of the high level is not detected).

According to an embodiment, when it is identified that the ping signal is detected and the flag is the first value in a state in which the detection of the output voltage of the power reception circuit 221 is stopped (Yes in operation 615), in operation 617, the electronic device 105 may maintain the display of the first information.

According to an embodiment, when the ping signal is detected and it is not identified that the flag is the first value in a state in which the detection of the output voltage of the power reception circuit 221 is stopped (No in operation 615), in operation 619, the electronic device 105 may display the second information indicating the charging end state on the display 225. According to implementation, when the ping signal is detected and it is not identified that the flag is the first value in a state in which the detection of the output voltage of the power reception circuit 221 is stopped, the electronic device 105 may not display any information related to charging.

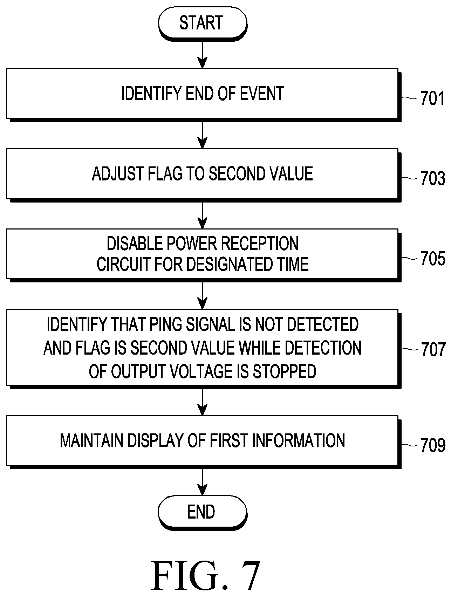

FIG. 7 is a flowchart illustrating an operation of maintaining display of first information indicating a state in which an electronic device wirelessly receiving power is being charged, according to an embodiment.

Referring to FIG. 7, according to an embodiment, in operation 701, the electronic device (e.g., the wireless power reception device 105 of FIG. 2) that wirelessly receives power may identify the end of the event while maintaining the display of the first information. In this case, the electronic device 105 may not receive power for charging a battery (e.g., the battery 221e of FIG. 2) from an external electronic device (e.g., the wireless power transmission device 101 of FIG. 2). Further, the electronic device 105 may identify the output voltage of the second level (e.g., the low level) (e.g., the output voltage of the power reception circuit (e.g., the power reception circuit 221 of FIG. 2)).

According to an embodiment, in operation 703, the electronic device 105 may designate or adjust the flag indicating the state in which the electronic device 105 temporarily stops receiving power as a second value.

According to an embodiment, in operation 705, the electronic device 105 may disable the power reception circuit (e.g., the power reception circuit 221 of FIG. 2) for a designated time. For example, the electronic device 105 may reset the power reception circuit 221. As the power reception circuit 221 is reset, the power reception circuit 221 may be disabled for the designated time. In this case, the power reception circuit 221 may not detect the ping signal output from the external electronic device 101.

According to an embodiment, in operation 707, the electronic device 105 may identify that the ping signal is not detected and the flag is the second value in a state in which the detection of the output voltage (e.g., the output voltage of the high level) is stopped.

According to an embodiment, in operation 709, the electronic device 105 may maintain the display of the first information, based on identifying that the ping signal is not detected and the flag is the second value in a state in which the detection of the output voltage (e.g., the output voltage of the high level) is stopped.

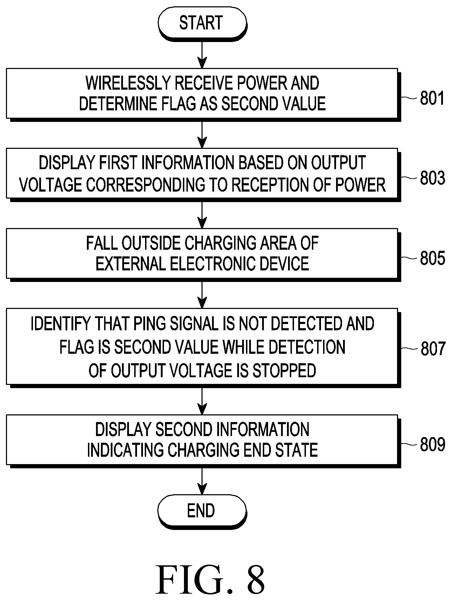

FIG. 8 is a flowchart illustrating an operation of displaying second information indicating a state in which an electronic device wirelessly receiving power is not charged, according to an embodiment.

Referring to FIG. 8, according to an embodiment, in operation 801, the electronic device (e.g., the wireless power reception device 105 of FIG. 2) that wirelessly receives power may wirelessly receive power from an external electronic device (e.g., the wireless power transmission device 101 of FIG. 2). The electronic device 105 may determine, designate, or adjust the flag indicating the state in which the electronic device 105 temporarily stops receiving power as the second value (e.g., flag = 0).

According to an embodiment, in operation 803, the electronic device 105 may display, on the display (e.g., the display 225 of FIG. 2), first information indicating the state of being charged or the state of being connected to the external electronic device 101 for charging, based on the output voltage (e.g., the high-level output voltage VOUT) of the power reception circuit (e.g., the power reception circuit 221 of FIG. 2) corresponding to reception of power.

According to an embodiment, in operation 805, the electronic device 105 may fall outside the charging area (or the chargeable area) of the external electronic device 101. For example, the electronic device 105 may fall outside the charging area (or the chargeable area) of the external electronic device 101 in a state in which power is received (e.g., a state in which the external electronic device is in a power transfer phase). When the electronic device 105 falls outside the charging area of the external electronic device 101, the electronic device 105 may not detect the output voltage (e.g., the high-level output voltage) corresponding to reception of power and the ping signal output from the external electronic device 101. For example, when the electronic device 105 falls outside the charging area (or the chargeable area) of the external electronic device 101, the electronic device 105 may identify the occurrence of an interrupt to the PDET signal.

According to an embodiment, in operation 807, the electronic device 105 may identify that the ping signal is not detected and the flag is the second value in a state in which the detection of the output voltage (e.g., the output voltage of the high level) is stopped. For example, when it is identified that an interrupt to the PDET signal occurs, the electronic device 105 may identify that the flag is the second value.

According to an embodiment, in operation 809, when it is identified that the ping signal is not detected and the flag is the second value in a state in which the detection of the output voltage (e.g., the output voltage of the high level) is stopped, the electronic device 105 may display, on the display 225, second information indicating the charging end state (or the uncharged state) instead of the first information. For example, based on identifying that the flag is the second value after the occurrence of the interrupt to the PDET signal is identified, the electronic device 105 may display, on the display 225, the second information indicating the charging end state (or the uncharged state) instead of the first information.

According to the above-described method, when the electronic device 105 falls outside the charging area of the external electronic device 101, the electronic device 105 may display the second information indicating the charging end state. Accordingly, the electronic device 105 may provide the user with accurate information about the charging status of the electronic device 105.

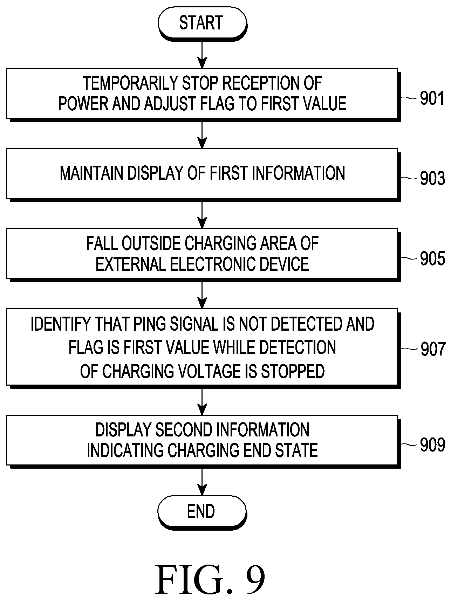

FIG. 9 is a flowchart illustrating an operation of displaying second information indicating a state in which an electronic device wirelessly receiving power is not charged, according to an embodiment.

Referring to FIG. 9, according to an embodiment, in operation 901, the electronic device (e.g., the wireless power reception device 105 of FIG. 2) that wirelessly receives power may temporarily stop receiving power, and may designate or adjust the flag indicating the state in which the electronic device 105 temporarily stops receiving power as the first value. For example, the electronic device 105 may provide the first packet to the external electronic device (e.g., the wireless power transmission device 101 of FIG. 2) that transmits power based on the occurrence of an event. In this case, the external electronic device 101 may enter the power transmission stop mode or the ping mode. The external electronic device 101 may stop transmitting power for charging the battery (e.g., the battery 221e of FIG. 2) and may output a ping signal in the power transmission stop mode or the ping mode. Thereafter, the electronic device 105 may temporarily fail to receive power and may identify or detect the ping signal output from the external electronic device 101.

According to an embodiment, in operation 903, the electronic device 105 may maintain the display of the first information indicating the state in which the electronic device 105 is being charged or the state in which the electronic device 105 is connected to the external electronic device 101 for charging, in a state in which power reception is temporarily stopped.

According to an embodiment, in operation 905, the electronic device 105 may fall outside the charging area (or the chargeable area) of the external electronic device 101. For example, the electronic device 105 may fall outside the charging area (or the chargeable area) of the external electronic device 101 in a state in which power reception is temporarily stopped (e.g., in the power transmission stop state or the ping mode of the external electronic device 101). For example, when the electronic device 105 falls outside the charging area of the external electronic device 101, the electronic device 105 may not detect the output voltage (e.g., the high-level output voltage) corresponding to reception of power and the ping signal output from the external electronic device 101.

According to an embodiment, in operation 907, the electronic device 105 may identify that the ping signal is not detected and the flag is the first value in a state in which the detection of the output voltage (e.g., the output voltage of the high level) of the power reception circuit (e.g., the power reception circuit 221 of FIG. 2) is stopped.

According to an embodiment, in operation 909, when it is identified that the ping signal is not detected and the flag is the first value in a state in which the detection of the output voltage (e.g., the output voltage of the high level) of the power reception circuit 221 is stopped, the electronic device 105 may display second information indicating the charging end state on the display (e.g., the display 225 of FIG. 2) instead of the first information.

According to the above-described method, when the electronic device 105 falls outside the charging area of the external electronic device 101, the electronic device 105 may display the second information indicating the charging end state. Accordingly, the electronic device 105 may provide the user with accurate information about the charging status of the electronic device 105.

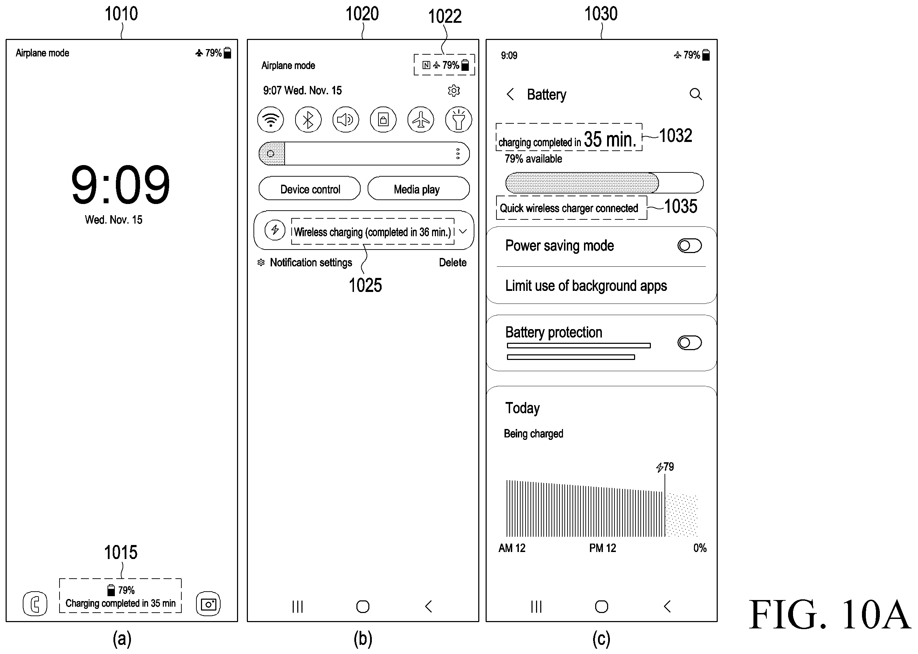

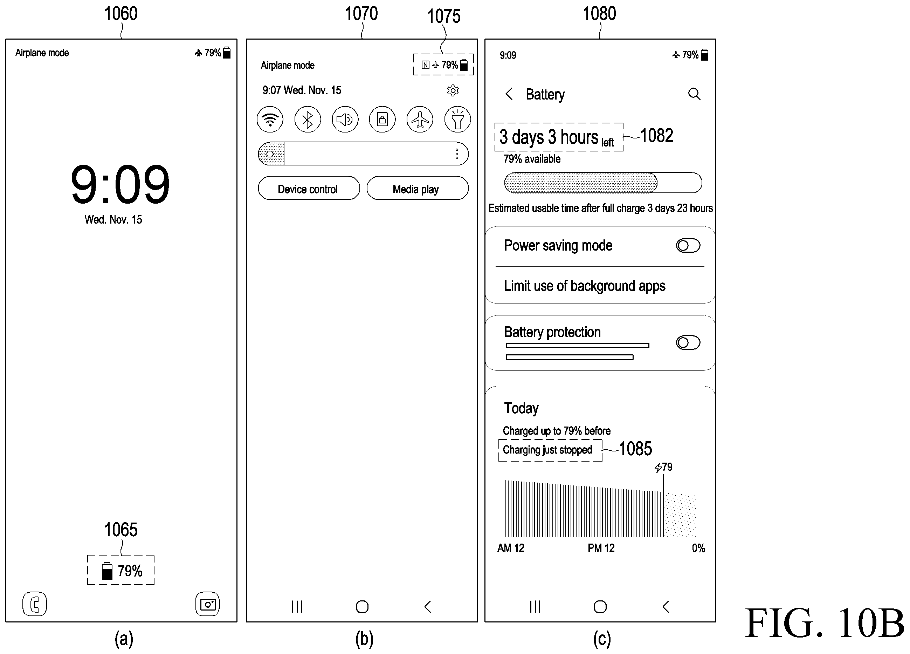

FIG. 10A is a view illustrating first information displayed by an electronic device wirelessly receiving power according to an embodiment. FIG. 10B is a view illustrating second information displayed by an electronic device wirelessly receiving power according to an embodiment;

Referring to FIG. 10A, according to an embodiment, the electronic device (e.g., the wireless power reception device 105 of FIG. 2) that wirelessly receives power may receive power from an external electronic device (e.g., the wireless power transmission device 101 of FIG. 2) or may display first information in a state in which reception of power is temporarily stopped. For example, the first information may include information indicating a state in which the electronic device 105 is being charged or a state in which the electronic device 105 is connected to the external electronic device 101 for charging when the electronic device 105 is in the first state. For example, the first state of the electronic device 105 may include a state in which the battery level of the battery (e.g., the battery 221e of FIG. 2) of the electronic device 105 is 0 to 99%.

According to an embodiment, referring to FIG. 10A(a), the electronic device 105 may display first information 1015 on a first screen 1010 (e.g., a standby screen). For example, the electronic device 105 may provide or display information about the current battery level through the first information 1015.

According to an embodiment, referring to FIG. 10A(b), the electronic device 105 may display the first information 1022 on the status bar portion of the second screen 1020. Further, the electronic device 105 may display the first information 1025 on the notification bar of the second screen 1020. For example, the electronic device 105 may provide or display information about the current battery level and/or information about the time required to fully charge the battery through the first information 1022 and/or 1025.

According to an embodiment, referring to FIG. 10A(c), the electronic device 105 may display first information 1032 and/or 1035 on a third screen 1030 (e.g., a battery information screen). For example, the electronic device 105 may provide or display, through the first information 1032 and/or 1035, information about the time required to fully charge the battery, information indicating the state in which the electronic device 105 is connected to the external electronic device 101, and/or information about the type of charging (e.g., normal charging, quick charging, or ultra quick charging).

Referring to FIG. 10B, according to an embodiment, the electronic device (e.g., the wireless power reception device 105 of FIG. 2) that wirelessly receives power may display second information in a state in which reception of power from an external electronic device (e.g., the wireless power transmission device 101 of FIG. 2) is terminated. For example, the second information may include information indicating a state in which wireless power charging is terminated when the electronic device 105 is in the first state. For example, the first state of the electronic device 105 may include a state in which the battery level of the battery (e.g., the battery 221e of FIG. 2) of the electronic device 105 is 0 to 99%.

According to an embodiment, referring to FIG. 10B(a), the electronic device 105 may display second information 1065 on a first screen 1060 (e.g., a standby screen). For example, the electronic device 105 may provide or display information indicating that the charging operation is not currently performed, through the second information 1065.

According to an embodiment, referring to FIG. 10B(b), the electronic device 105 may display the second information 1075 on the status bar portion of the second screen 1070. For example, the electronic device 105 may provide or display information indicating that the charging operation is not currently performed, through the second information 1075.

According to an embodiment, referring to FIG. 10C(c), the electronic device 105 may display second information 1082 and/or 1085 on a third screen 1080 (e.g., a battery information screen). For example, the electronic device 105 may provide or display, through the second information 1082 and/or 1085, information about the time during which the electronic device 105 may be driven at the battery level and/or information indicating that the current charging operation is not performed.

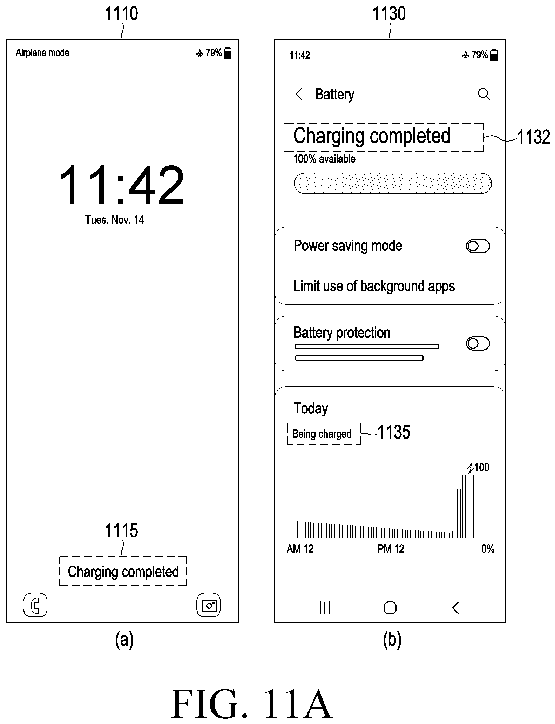

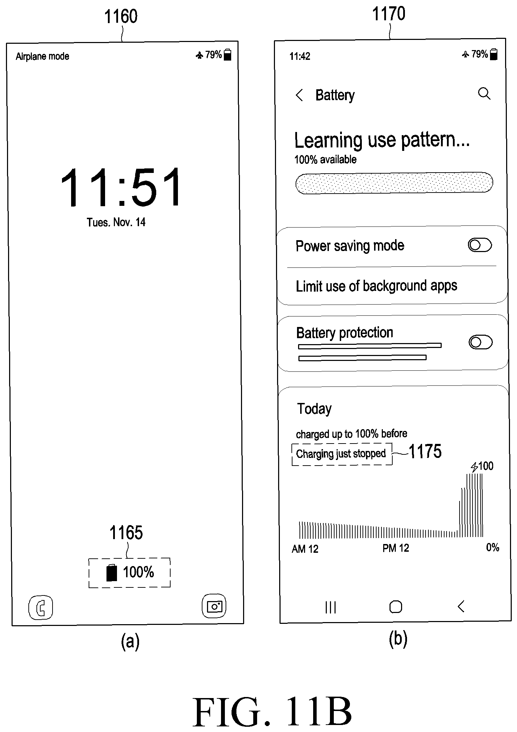

FIG. 11A is a view illustrating first information displayed by an electronic device wirelessly receiving power according to an embodiment. FIG. 11B is a view illustrating second information displayed by an electronic device wirelessly receiving power according to an embodiment; and

Referring to FIG. 11A, according to an embodiment, the electronic device (e.g., the wireless power reception device 105 of FIG. 2) that wirelessly receives power may receive power from an external electronic device (e.g., the wireless power transmission device 101 of FIG. 2) or may display first information in a state in which reception of power is temporarily stopped. For example, the first information may include information indicating a state in which the electronic device 105 is being charged or a state in which the electronic device 105 is connected to the external electronic device 101 for charging when the electronic device 105 is in the second state. For example, the second state of the electronic device 105 may include a state in which the battery level of the battery (e.g., the battery 221e of FIG. 2) of the electronic device 105 is 100%.

According to an embodiment, referring to FIG. 11A(a), the electronic device 105 may display first information 1115 on a first screen 1110 (e.g., a standby screen). For example, the electronic device 105 may provide or display information indicating that charging is completed or information indicating that the battery is fully charged, through the first information 1115.

According to an embodiment, referring to FIG. 11A(b), the electronic device 105 may display first information 1122 and/or 1125 on a second screen 1120 (e.g., a battery information screen). For example, the electronic device 105 may provide or display, through the first information 1122 and/or 1125, information indicating that charging has been completed, information indicating a state of being connected to the external electronic device 101, and/or information indicating that charging is being performed.

Referring to FIG. 11B, according to an embodiment, the electronic device (e.g., the wireless power reception device 105 of FIG. 2) that wirelessly receives power may display second information in a state in which reception of power from an external electronic device (e.g., the wireless power transmission device 101 of FIG. 2) is terminated. For example, the second information may include information indicating a state in which wireless power charging is terminated when the electronic device 105 is in the second state. For example, the second state of the electronic device 105 may include a state in which the battery level of the battery (e.g., the battery 221e of FIG. 2) of the electronic device 105 is 100%.

According to an embodiment, referring to FIG. 11B(a), the electronic device 105 may display second information 1165 on a first screen 1160 (e.g., a standby screen). For example, the electronic device 105 may provide or display information indicating that the charging operation is not currently performed, through the second information 1165.

According to an embodiment, referring to FIG. 11B(b), the electronic device 105 may display second information 1175 on a third screen 1170 (e.g., a battery information screen). For example, the electronic device 105 may provide or display information indicating that the charging operation is not currently performed, through the second information 1175.

The electronic device (or wireless power reception device) 105 may be implemented to be identical or similar to the following electronic device 1201, 1202, or 1204.

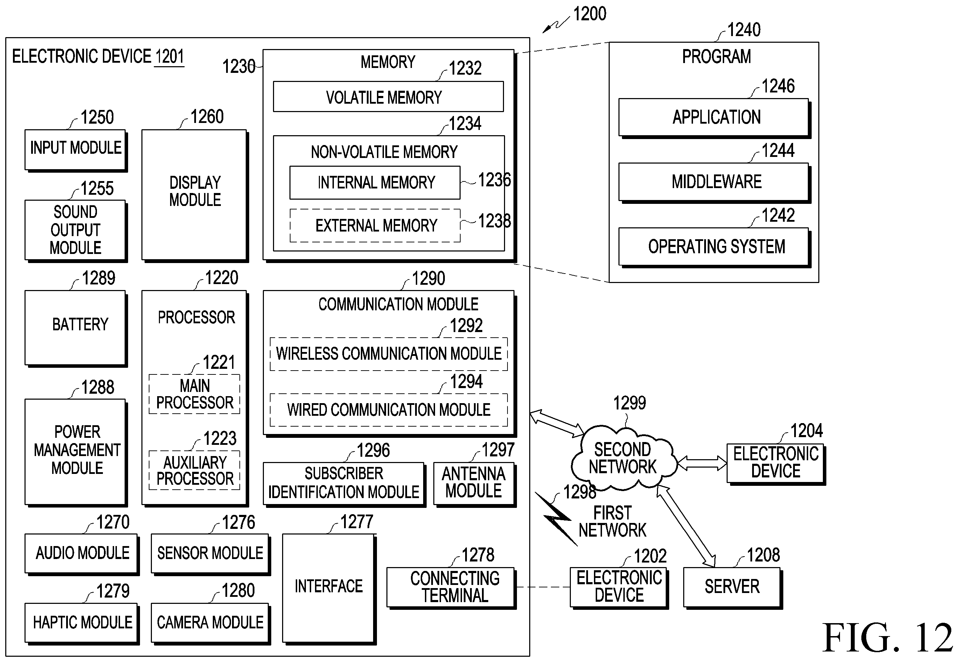

FIG. 12 is a block diagram illustrating an electronic device 1201 in a network environment 1200 according to various embodiments. Referring to FIG. 12, the electronic device 1201 in the network environment 1200 may communicate with at least one of an electronic device 1202 via a first network 1298 (e.g., a short-range wireless communication network), or an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In an embodiment, at least one (e.g., the connecting terminal 1278) of the components may be omitted from the electronic device 1201, or one or more other components may be added in the electronic device 101. According to an embodiment, some (e.g., the sensor module 1276, the camera module 1280, or the antenna module 1297) of the components may be integrated into a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1201 includes the main processor 1221 and the auxiliary processor 1223, the auxiliary processor 1223 may be configured to use lower power than the main processor 1221 or to be specified for a designated function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 123. According to an embodiment, the auxiliary processor 1223 (e.g., the neural processing unit) may include a hardware structure specified for artificial intelligence model processing. The artificial intelligence model may be generated via machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by other component (e.g., the processor 1220) of the electronic device 1201, from the outside (e.g., a user) of the electronic device 1201. The input module 1250 may include, for example, a microphone, a mouse, a keyboard, keys (e.g., buttons), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display 1260 may include, for example, a display, a hologram device, or a projector and control circuitry to control a corresponding one of the display, hologram device, and projector. According to an embodiment, the display 1260 may include a touch sensor configured to detect a touch, or a pressure sensor configured to measure the intensity of a force generated by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 101, and then generate an electrical signal or data value corresponding to the detected state. According to an embodiment, the sensor module 1276 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or motion) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device 1204 via a first network 1298 (e.g., a short-range communication network, such as Bluetooth^{™}, wireless-fidelity (Wi-Fi) direct, or infrared data association (IrDA)) or a second network 1299 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1292 may identify or authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1297 may transmit or receive a signal or power to or from the outside (e.g., the external electronic device). According to an embodiment, the antenna module 1297 may include one antenna including a radiator formed of a conductor or conductive pattern formed on a substrate (e.g., a printed circuit board (PCB)). According to an embodiment, the antenna module 1297 may include a plurality of antennas (e.g., an antenna array). In this case, at least one antenna appropriate for a communication scheme used in a communication network, such as the first network 1298 or the second network 1299, may be selected from the plurality of antennas by, e.g., the communication module 1290. The signal or the power may then be transmitted or received between the communication module 1290 and the external electronic device via the selected at least one antenna. According to an embodiment, other parts (e.g., radio frequency integrated circuit (RFIC)) than the radiator may be further formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. The external electronic devices 1202 or 1204 each may be a device of the same or a different type from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. **In** another embodiment, the external electronic device 1204 may include an Internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or health-care) based on 5G communication technology or IoT-related technology.

According to an embodiment, an electronic device 105 may comprise a power reception circuit 221 configured to wirelessly receive power, a display 225, at least one processor 222, and memory 1230 storing instructions. According to an embodiment, the instructions, when executed by the at least one processor individually or collectively, may cause the electronic device to wirelessly receive, through the power reception circuit, power from an external electronic device. According to an embodiment, the instructions, when executed by the at least one processor individually or collectively, may cause the electronic device to display, on the display, first information indicating a state in which the electronic device is being charged while receiving the power. According to an embodiment, the instructions, when executed by the at least one processor individually or collectively, may cause the electronic device to identify an occurrence of an event designated to temporarily stop receiving the power, while receiving the power. According to an embodiment, the instructions, when executed by the at least one processor individually or collectively, may cause the electronic device to, based on the occurrence of the event, provide a first packet for requesting to temporarily stop transmitting the power to the external electronic device. According to an embodiment, the instructions, when executed by the at least one processor individually or collectively, may cause the electronic device to, based on providing the first packet, maintain displaying the first information on the display while the reception of the power is stopped.

According to an embodiment, the instructions, when executed by the at least one processor individually or collectively, may cause the electronic device to, while the event occurs, identify a ping signal periodically transmitted from the external electronic device based on providing the first packet and provide a response signal to the ping signal to the external electronic device.

According to an embodiment, the instructions, when executed by the at least one processor individually or collectively, may cause the electronic device to, when the event ends, stop providing the response signal to the ping signal periodically transmitted from the external electronic device to the external electronic device.

According to an embodiment, the instructions, when executed by the at least one processor individually or collectively, may cause the electronic device to, when the event ends, disable the power reception circuit for a designated period of time for the external electronic device to re-transmit the power based on failing to identify the response signal for the designated period of time.

According to an embodiment, the instructions, when executed by the at least one processor individually or collectively, may cause the electronic device to resume the reception of the power from the external electronic device based on stopping providing the response signal to the external electronic device.

According to an embodiment, the event may include at least one of fully charging a battery included in the electronic device, receiving a phone call, or detecting a temperature exceeding a designated temperature.

According to an embodiment, the instructions, when executed by the at least one processor individually or collectively, may cause the electronic device to identify a detection status of the ping signal periodically transmitted from the external electronic device, through at least one pin included in a control circuit of the power reception circuit.

According to an embodiment, the instructions, when executed by the at least one processor individually or collectively, may cause the electronic device to identify whether the external electronic device supports power transfer hold mode. According to an embodiment, the instructions, when executed by the at least one processor individually or collectively, may cause the electronic device to provide the first packet to the external electronic device when identifying that the external electronic device supports the power transfer hold mode.

According to an embodiment, the first packet may include information instructing the external electronic device to enter a power transfer hold mode or ping mode in which the external electronic device outputs a ping signal without transmitting the power.

According to an embodiment, the instructions, when executed by the at least one processor individually or collectively, may cause the electronic device to, based on an occurrence of the event, designate a flag indicating a state in which the electronic device temporarily stops receiving the power as a first value. According to an embodiment, the instructions, when executed by the at least one processor individually or collectively, may cause the electronic device to maintain displaying the first information based on identifying the first value and the ping signal while not receiving the power from the external electronic device.

According to an embodiment, the instructions, when executed by the at least one processor individually or collectively, may cause the electronic device to, based on the event ending, designate the flag as a second value that is different from the first value. According to an embodiment, the instructions, when executed by the at least one processor individually or collectively, may cause the electronic device to maintain displaying the first information based on identifying the second value even when failing to identify the ping signal for a designated period of time while not receiving the power from the external electronic device.

According to an embodiment, a method for operating an electronic device 105 may comprise wirelessly receiving, through a power reception circuit 221 included in the electronic device, power from an external electronic device 101. According to an embodiment, the method for operating the electronic device may comprise displaying, on a display 225 of the electronic device, first information indicating a state in which the electronic device is being charged while receiving the power. According to an embodiment, the method for operating the electronic device may comprise identifying an occurrence of an event designated to temporarily stop receiving the power, while receiving the power. According to an embodiment, the method for operating the electronic device may comprise, based on the occurrence of the event, providing a first packet for requesting to temporarily stop transmitting the power to the external electronic device. According to an embodiment, the method for operating the electronic device may comprise, based on providing the first packet, maintaining displaying the first information on the display while the reception of the power is stopped.

According to an embodiment, the method for operating the electronic device may further comprise, while the event occurs, identifying a ping signal periodically transmitted from the external electronic device based on providing the first packet and providing a response signal to the ping signal to the external electronic device.

According to an embodiment, the method for operating the electronic device may further comprise, when the event ends, stopping providing the response signal to the ping signal periodically transmitted from the external electronic device to the external electronic device.

According to an embodiment, the method for operating the electronic device may further comprise, when the event ends, disabling the power reception circuit for a designated period of time for the external electronic device to re-transmit the power based on failing to identify the response signal for the designated period of time.

According to an embodiment, the method for operating the electronic device may further comprise resuming the reception of the power from the external electronic device based on stopping providing the response signal to the external electronic device.

According to an embodiment, the event may include at least one of fully charging a battery included in the electronic device, receiving a phone call, or detecting a temperature exceeding a designated temperature.

According to an embodiment, the method for operating the electronic device may further comprise identifying a detection status of the ping signal periodically transmitted from the external electronic device, through at least one pin included in a control circuit of the power reception circuit.

According to an embodiment, providing the first packet may include identifying whether the external electronic device supports power transfer hold mode. According to an embodiment, providing the first packet may include providing the first packet to the external electronic device when identifying that the external electronic device supports the power transfer hold mode.

According to an embodiment, the first packet may include information instructing the external electronic device to enter a power transfer hold mode or ping mode in which the external electronic device outputs a ping signal without transmitting the power.

According to an embodiment, the method for operating the electronic device may further comprise, based on an occurrence of the event, designating a flag indicating a state in which the electronic device temporarily stops receiving the power as a first value. According to an embodiment, the method for operating the electronic device may further comprise maintaining displaying the first information based on identifying the first value and the ping signal while not receiving the power from the external electronic device.

According to an embodiment, the method for operating the electronic device may further comprise, based on the event ending, designating the flag as a second value that is different from the first value. According to an embodiment, the method for operating the electronic device may further comprise maintaining displaying the first information based on identifying the second value even when failing to identify the ping signal for a designated period of time while not receiving the power from the external electronic device.

According to an embodiment, a non-transitory computer-readable recording medium 1230 may store instructions that, when executed by at least one processor individually or collectively, cause an electronic device 105 to wirelessly receive, through a power reception circuit 221 included in an electronic device 105, power from an external electronic device 101, display, on a display 225 of the electronic device, first information indicating a state in which the electronic device is being charged while receiving the power, identify an occurrence of an event designated to temporarily stop receiving the power, while receiving the power, based on the occurrence of the event, provide a first packet for requesting to temporarily stop transmitting the power to the external electronic device, and based on providing the first packet, maintain displaying the first information on the display while the reception of the power is stopped.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (105) comprising:
a power reception circuit (221) configured to wirelessly receive power;
a display (225);
at least one processor (222); and
memory (1230) storing instructions that, when executed by the at least one processor individually or collectively, cause the electronic device to:
wirelessly receive, through the power reception circuit, power from an external electronic device (101);
display, on the display, first information indicating a state in which the electronic device is being charged while receiving the power;
identify an occurrence of an event designated to temporarily stop receiving the power, while receiving the power;
based on the occurrence of the event, provide a first packet for requesting to temporarily stop transmitting the power to the external electronic device; and
based on providing the first packet, maintain displaying the first information on the display while the reception of the power is stopped.

2. The electronic device of claim 1, wherein the instructions, when executed by the at least one processor individually or collectively, cause the electronic device to:
while the event occurs, identify a ping signal periodically transmitted from the external electronic device based on providing the first packet and provide a response signal to the ping signal to the external electronic device.

3. The electronic device of claim 1 or 2, wherein the instructions, when executed by the at least one processor individually or collectively, cause the electronic device to:
when the event ends, stop providing the response signal to the ping signal periodically transmitted from the external electronic device to the external electronic device.

4. The electronic device of any one of claims 1 to 3, wherein the instructions, when executed by the at least one processor individually or collectively, cause the electronic device to:
when the event ends, disable the power reception circuit for a designated period of time for the external electronic device to re-transmit the power based on failing to identify the response signal for the designated period of time.

5. The electronic device of any one of claims 1 to 4,
wherein the event includes at least one of fully charging a battery included in the electronic device, receiving a phone call, or detecting a temperature exceeding a designated temperature.

6. The electronic device of any one of claims 1 to 5, wherein the instructions, when executed by the at least one processor individually or collectively, cause the electronic device to:
identify a detection status of the ping signal periodically transmitted from the external electronic device, through at least one pin included in a control circuit of the power reception circuit.

7. The electronic device of any one of claims 1 to 6, wherein the instructions, when executed by the at least one processor individually or collectively, cause the electronic device to:
identify whether the external electronic device supports power transfer hold mode; and
provide the first packet to the external electronic device when identifying that the external electronic device supports the power transfer hold mode.

8. The electronic device of any one of claims 1 to 7,
wherein the first packet includes information instructing the external electronic device to enter a power transfer hold mode or ping mode in which the external electronic device outputs a ping signal without transmitting the power.

9. The electronic device of any one of claims 1 to 8, wherein the instructions, when executed by the at least one processor individually or collectively, cause the electronic device to:
based on an occurrence of the event, designate a flag indicating a state in which the electronic device temporarily stops receiving the power as a first value; and
maintain displaying the first information based on identifying the first value and the ping signal while not receiving the power from the external electronic device.

10. The electronic device of any one of claims 1 to 9, wherein the instructions, when executed by the at least one processor individually or collectively, cause the electronic device to:
based on the event ending, designate the flag as a second value that is different from the first value; and
maintain displaying the first information based on identifying the second value even when failing to identify the ping signal for a designated period of time while not receiving the power from the external electronic device.

11. A method for operating an electronic device (105), the method comprising:
wirelessly receiving, through a power reception circuit (221) included in the electronic device, power from an external electronic device (101);
displaying, on a display (225) of the electronic device, first information indicating a state in which the electronic device is being charged while receiving the power;
identifying an occurrence of an event designated to temporarily stop receiving the power, while receiving the power;
based on the occurrence of the event, providing a first packet for requesting to temporarily stop transmitting the power to the external electronic device; and
based on providing the first packet, maintaining displaying the first information on the display while the reception of the power is stopped.

12. The method of claim 11, further comprising
while the event occurs, identifying a ping signal periodically transmitted from the external electronic device based on providing the first packet and providing a response signal to the ping signal to the external electronic device.

13. The method of claim 11 or 12, further comprising
when the event ends, stopping providing the response signal to the ping signal periodically transmitted from the external electronic device to the external electronic device.

14. The method of any one of claims 11 to 13, further comprising
when the event ends, disabling the power reception circuit for a designated period of time for the external electronic device to re-transmit the power based on failing to identify the response signal for the designated period of time.

15. A non-transitory computer-readable recording medium storing instructions,
wherein the instructions, when executed by at least one processor individually or collectively, cause an electronic device (105) to:
wirelessly receive, through a power reception circuit (221) included in the electronic device, power from an external electronic device (101);
display, on a display (225) of the electronic device, first information indicating a state in which the electronic device is being charged while receiving the power;
identify an occurrence of an event designated to temporarily stop receiving the power, while receiving the power;
based on the occurrence of the event, provide a first packet for requesting to temporarily stop transmitting the power to the external electronic device; and
based on providing the first packet, maintain displaying the first information on the display while the reception of the power is stopped.
